# EUROPEAN PATENT APPLICATION

(11) **EP 4 797 584 A1**
(43) Date of publication of application: **26.08.2026**
(21) Application number: 24890142.3
(22) Date of filing: 08.07.2024
(51) Int. Cl.: H04L 1/00

(54) **PARAMETER DETERMINATION METHOD, COMMUNICATION APPARATUS AND SYSTEM**

(30) Priority: 16.11.2023 CN 202311541179
(71) Applicant: HUAWEI TECHNOLOGIES CO., LTD., Shenzhen, Guangdong 518129 (CN)
(72) Inventor: LIU, Xinchao, Shenzhen, Guangdong 518129 (CN); LIU, Zhigang, Shenzhen, Guangdong 518129 (CN); CHEN, Yufang, Shenzhen, Guangdong 518129 (CN)
(74) Representative: Gill Jennings & Every LLP
(86) International application number: PCT/CN2024/104206
(87) International publication number: WO 2025/102773

(57) **Abstract**

A parameter determining method, and a communication apparatus and system are provided. The method is performed by a transmission device connected to a first client side device in a first data center. The method includes: determining a transmission delay and/or a transmission distance of a transmission channel between the first data center and a second data center; and sending delay indication information to the first client side device, where the delay indication information indicates the transmission delay and/or the transmission distance, and the transmission delay and/or the transmission distance are/is used to determine at least one of the following: a quantity of send queues, a depth of the send queue, or a block size of a message block of service data, where the service data is data to be transmitted through the transmission channel from the first client side device, and the send queue is a queue of the first client side device when the service data is sent through the transmission channel. The technical solutions may be applied to the field of communication technologies, and help increase a throughput during data transmission and improve efficiency of long-distance data transmission when long-distance data transmission is performed based on RDMA.

## Description

This application claims priority to Chinese Patent Application No. 202311541179.7, filed with the China National Intellectual Property Administration on November 16, 2023 and entitled "PARAMETER DETERMINING METHOD, AND COMMUNICATION APPARATUS AND SYSTEM", which is incorporated herein by reference in its entirety.

### TECHNICAL FIELD

This application relates to the field of communication technologies, and more specifically, to a parameter determining method, and a communication apparatus and system.

### BACKGROUND

Standardization of hardware devices with computational power and algorithm models and maturity of software technologies such as artificial intelligence and cloud computing bring an explosive data growth. A scenario of cross-region data production and processing separation becomes increasingly common, relating to how to efficiently move a large amount of data over a long distance. A long-distance lossless transmission technology is a very important technology, and is highly practical and economical.

A conventional transmission control protocol/internet protocol (transmission control protocol/internet protocol, TCP/IP) has numerous limitations in a high-speed long-distance network, and transmission performance of the conventional TCP/IP cannot meet requirements of increasing massive data transmission applications. A data transmission manner gradually evolves to remote direct memory access (remote direct memory access, RDMA). In comparison with a conventional TCP/IP-based transmission manner, the RDMA is more efficient because data can be transmitted from one server to another server or from a memory to a server with extremely low central processing unit (central processing unit, CPU) usage.

However, when an RDMA technology is applied to long-distance data transmission, an increase of a distance between a data transmit end and a data receive end causes a decrease of a throughput. Therefore, how to increase a throughput during long-distance data transmission becomes an urgent problem to be resolved.

### SUMMARY

This application provides a parameter determining method, and a communication apparatus and system, to increase a throughput during long-distance data transmission and improve efficiency of long-distance data transmission.

According to a first aspect, a parameter determining method is provided. The method may be performed by a first transmission device or a component (for example, a chip or a chip system) of the first transmission device. This is not limited in this application. The first transmission device is connected to a first client side device in a first data center (data center, DC). The method includes: determining a transmission delay and/or a transmission distance of a first transmission channel between the first DC and a second DC; and sending delay indication information to the first client side device, where the delay indication information indicates the transmission delay and/or the transmission distance, the transmission delay and/or the transmission distance are/is used to determine a sending parameter, and the sending parameter indicates at least one of the following: a quantity of send queues, a depth of the send queue, or a block size of a message block of service data, where the service data is data to be transmitted through the first transmission channel from the first client side device, and the send queue is a queue of the first client side device when the service data is sent through the first transmission channel.

In some implementations, the depth of the send queue indicates a quantity of message blocks included in each send queue.

In some implementations, before the delay indication information is received, the method further includes: sending measurement indication information to the first transmission device, where the measurement indication information indicates the first transmission device to determine the transmission delay/or the transmission distance of the first transmission channel.

In some implementations, transmission of the delay indication information may be performed based on a control plane protocol or a management plane protocol.

In some implementations, a transmission delay between the first transmission device and the first client side device may be ignored or may be calibrated.

It should be noted that the transmission delay of the first transmission channel may be a one-way transmission delay, or may be a round-trip transmission delay. The one-way transmission delay is duration from the first client side device sending information to a client side device in the second DC receiving the information. The round-trip transmission delay is a sum of duration from the first client side device sending the information to the client side device in the second DC receiving information, and duration from the client side device in the second DC sending information to the first client side device receiving the information.

In the foregoing technical solution, a transmission device notifies a client side device of a transmission delay and/or a transmission distance of a transmission channel, to help the client side device set a parameter for sending data, and increase a throughput of data transmission between data centers, and help improve efficiency of long-distance data transmission.

With reference to the first aspect, in some implementations of the first aspect, determining the transmission delay and/or the transmission distance of the first transmission channel between the first DC and the second DC includes: when a second transmission channel between the first DC and the second DC is faulty, and the second transmission channel is switched to the first transmission channel, determining the transmission delay and/or the transmission distance.

In the foregoing technical solution, after determining that a transmission channel is faulty, and switching the transmission channel, a transmission device determines a transmission distance and/or a transmission distance of a switched transmission channel, and notifies a client side device, to help the client side device adjust a sending parameter of service data and the transmission channel in a timely manner, and help ensure continuity and high efficiency of service data transmission.

With reference to the first aspect, in some implementations of the first aspect, the method further includes: sending fault indication information to the first client side device, where the fault indication information indicates that the second transmission channel is faulty, and indicates the first client side device to transmit the service data through the first transmission channel.

In the foregoing technical solution, when detecting that the second transmission channel is faulty, a client side device may still send the service data to a transmission device based on a parameter or an address of the second transmission channel. In this case, even if receiving the service data, the transmission device cannot transmit the service data to the second DC through the second transmission channel. Therefore, indicating the fault to the client side device helps prevent the client side device from continuing to send the service data to the transmission device based on the parameter or the address of the second transmission channel, to reduce overheads required for service data transmission between the client side device and the transmission device.

With reference to the first aspect, in some implementations of the first aspect, the method further includes: sending bit error information to the first client side device, where the bit error information indicates a bit error rate of a third transmission channel between the first DC and the second DC, and the bit error rate is used to control switching of the third transmission channel to the first transmission channel.

In some implementations, transmission of the delay indication information and the bit error information may be performed by using a same packet.

It should be understood that, after a transmission channel is switched to the first transmission channel, the first transmission device may determine the transmission delay and/or the transmission distance of the first transmission channel.

In the foregoing technical solution, the bit error rate is indicated to a client side device, so that when the bit error rate of the third transmission channel is high, the client side device can control, in time, the transmission channel to perform switching to the first transmission channel, to help reduce impact of a service data packet loss on a transmission speed, and improve service performance of the client side device.

With reference to the first aspect, in some implementations of the first aspect, the delay indication information further indicates bandwidth of the first transmission channel, and the bandwidth is used to determine the sending parameter.

In the foregoing technical solution, when bandwidth of a transmission channel is not fixed, the bandwidth of the first transmission channel is indicated to a client side device, so that the client side device determines the sending parameter.

With reference to the first aspect, in some implementations of the first aspect, the delay indication information further indicates that a networking type between the first DC and the second DC is a hard channel or a soft channel.

In some implementations, the bandwidth of the first transmission channel, the networking type between the first DC and the second DC, and the transmission delay and/or the transmission distance of the first transmission channel may be sent by using different information, for example, may be sent by using delay indication information of different frames.

When the networking type between the first DC and the second DC is the soft channel, the first transmission channel includes a plurality of sub transmission channels, and the transmission delay of the first transmission channel includes a transmission delay of each of the plurality of sub transmission channels.

In some implementations, when the first transmission channel includes the plurality of sub transmission channels, a client side device may add an additional transmission delay based on the received transmission delay of the first transmission channel, to obtain a corrected transmission delay, and then determine the sending parameter based on the corrected transmission delay, to help reduce a congestion probability during service data transmission.

In the foregoing technical solution, the networking type between the first DC and the second DC is indicated to the client side device, to help the client side device select, based on the networking type, a manner of determining the sending parameter.

With reference to the first aspect, in some implementations of the first aspect, transmission of the service data is performed between the first DC and the second DC based on a remote direct memory access RDMA protocol.

According to a second aspect, a parameter determining method is provided. The method may be performed by a first client side device in a first DC, or may be performed by a component (for example, a chip or a chip system) of the first client side device. This is not limited in this application. The method includes: receiving delay indication information from a first transmission device, where the delay indication information indicates a transmission delay and/or a transmission distance of a first transmission channel between the first DC and a second DC; and determining a sending parameter based on the transmission delay and/or the transmission distance, where the sending parameter indicates at least one of the following: a quantity of send queues, a depth of the send queue, or a block size of a message block of service data, where the service data is data to be transmitted through the first transmission channel from the first client side device, and the send queue is a queue of the first client side device when the service data is sent through the first transmission channel.

With reference to the second aspect, in some implementations of the second aspect, the method further includes: receiving bit error information from the first transmission device, where the bit error information indicates a bit error rate of a third transmission channel between the first DC and the second DC; and when the bit error rate is greater than or equal to a bit error rate threshold, controlling to switch the third transmission channel to the first transmission channel.

With reference to the second aspect, in some implementations of the second aspect, the method further includes: receiving fault indication information from the first transmission device, where the fault indication information indicates that a second transmission channel between the first DC and the second DC is faulty; and performing transmission of the service data through the first transmission channel based on the fault indication information.

With reference to the second aspect, in some implementations of the second aspect, the delay indication information further indicates bandwidth of the first transmission channel, and the bandwidth is used to determine the sending parameter.

With reference to the second aspect, in some implementations of the second aspect, the delay indication information further indicates that a networking type between the first DC and the second DC is a hard channel or a soft channel.

With reference to the second aspect, in some implementations of the second aspect, the first transmission channel includes a plurality of sub transmission channels, and the transmission delay of the first transmission channel includes a transmission delay of each of the plurality of sub transmission channels.

With reference to the second aspect, in some implementations of the second aspect, transmission of the service data is performed between the first DC and the second DC based on a remote direct memory access RDMA protocol.

According to a third aspect, a communication apparatus is provided. The apparatus may be disposed in the foregoing first client side device. The apparatus includes a processing unit and a transceiver unit. The processing unit is configured to determine a transmission delay and/or a transmission distance of a first transmission channel between a first DC and a second DC. The transceiver unit is configured to send delay indication information to the first client side device, where the delay indication information indicates the transmission delay and/or the transmission distance, the transmission delay and/or the transmission distance are/is used to determine a sending parameter, and the sending parameter indicates at least one of the following: a quantity of send queues, a depth of the send queue, or a block size of a message block of service data, where the service data is data to be transmitted through the first transmission channel from the first client side device, and the send queue is a queue of the first client side device when the service data is sent through the first transmission channel.

With reference to the third aspect, in some implementations of the third aspect, the processing unit is configured to: when a second transmission channel between the first DC and the second DC is faulty, and the second transmission channel is switched to the first transmission channel, determine the transmission delay and/or the transmission distance.

With reference to the third aspect, in some implementations of the third aspect, the transceiver unit is further configured to send fault indication information to the first client side device, where the fault indication information indicates that the second transmission channel is faulty, and indicates the first client side device to transmit the service data through the first transmission channel.

With reference to the third aspect, in some implementations of the third aspect, the transceiver unit is configured to send bit error information to the first client side device, where the bit error information indicates a bit error rate of a third transmission channel between the first DC and the second DC, and the bit error rate is used to control switching of the third transmission channel to the first transmission channel.

With reference to the third aspect, in some implementations of the third aspect, the delay indication information further indicates bandwidth of the first transmission channel, and the bandwidth is used to determine the sending parameter.

With reference to the third aspect, in some implementations of the third aspect, the delay indication information further indicates that a networking type between the first DC and the second DC is a hard channel or a soft channel.

With reference to the third aspect, in some implementations of the third aspect, the first transmission channel includes a plurality of sub transmission channels, and the transmission delay of the first transmission channel includes a transmission delay of each of the plurality of sub transmission channels.

With reference to the third aspect, in some implementations of the third aspect, transmission of the service data is performed between the first DC and the second DC based on a remote direct memory access RDMA protocol.

According to a fourth aspect, a communication apparatus is provided. The apparatus may be disposed in the foregoing first transmission device. The apparatus includes a processing unit and a transceiver unit. The transceiver unit is configured to receive delay indication information from the first transmission device, where the delay indication information indicates a transmission delay and/or a transmission distance of a first transmission channel between the first DC and a second DC. The processing unit is configured to determine a sending parameter based on the transmission delay and/or the transmission distance, where the sending parameter indicates at least one of the following: a quantity of send queues, a depth of the send queue, or a block size of a message block of service data, where the service data is data to be transmitted through the first transmission channel from the first client side device, and the send queue is a queue of the first client side device when the service data is sent through the first transmission channel.

With reference to the fourth aspect, in some implementations of the fourth aspect, the transceiver unit is further configured to receive bit error information from the first transmission device, where the bit error information indicates a bit error rate of a third transmission channel between the first DC and the second DC. The processing unit is further configured to: when the bit error rate is greater than or equal to a bit error rate threshold, control to switch the third transmission channel to the first transmission channel.

With reference to the fourth aspect, in some implementations of the fourth aspect, the transceiver unit is further configured to receive fault indication information from the first transmission device, where the fault indication information indicates that a second transmission channel between the first DC and the second DC is faulty. The processing unit is further configured to perform transmission of the service data through the first transmission channel based on the fault indication information.

With reference to the fourth aspect, in some implementations of the fourth aspect, the delay indication information further indicates bandwidth of the first transmission channel, and the bandwidth is used to determine the sending parameter.

With reference to the fourth aspect, in some implementations of the fourth aspect, the delay indication information further indicates that a networking type between the first DC and the second DC is a hard channel or a soft channel.

With reference to the fourth aspect, in some implementations of the fourth aspect, the first transmission channel includes a plurality of sub transmission channels, and the transmission delay of the first transmission channel includes a transmission delay of each of the plurality of sub transmission channels.

With reference to the fourth aspect, in some implementations of the fourth aspect, transmission of the service data is performed between the first DC and the second DC based on a remote direct memory access RDMA protocol.

According to a fifth aspect, an embodiment of this application provides a processor, configured to perform the methods provided in the foregoing aspects. Unless otherwise stated, or if operations such as sending and receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a sixth aspect, an embodiment of this application provides a computer-readable storage medium. The computer-readable storage medium stores instructions or program code. When the instructions or the program code is executed by a processor, the method provided in any one of the implementations of the first aspect or the second aspect may be implemented.

According to a seventh aspect, an embodiment of this application provides a computer program product including instructions. When the computer program product runs on a computer, the computer is caused to perform the method provided in any one of the implementations of the first aspect or the second aspect.

According to an eighth aspect, an embodiment of this application provides a chip. The chip includes a processor and a communication interface. The processor reads, through the communication interface, instructions stored in a storage, to perform the method provided in any one of the implementations of the first aspect or the second aspect.

Optionally, in an implementation, the chip further includes the storage. The storage stores a computer program or the instructions. The processor is configured to execute the computer program or the instructions stored in the storage. When the computer program or the instructions are executed, the processor is configured to perform the method provided in any one of the implementations of the first aspect or the second aspect.

For specific beneficial effects brought by the second aspect to the eighth aspect, refer to the descriptions of the beneficial effects in the first aspect. Details are not described herein again.

### BRIEF DESCRIPTION OF DRAWINGS

FIG. 1A and FIG. 1B are block diagrams of architectures of a communication system according to an embodiment of this application;
FIG. 2A and FIG. 2B are other block diagrams of architectures of a communication system according to an embodiment of this application;
FIG. 3A and FIG. 3B are still other block diagrams of architectures of a communication system according to an embodiment of this application;
FIG. 4 is a schematic flowchart of a parameter determining method according to an embodiment of this application;
FIG. 5 is another schematic flowchart of a parameter determining method according to an embodiment of this application;
FIG. 6 is a diagram of a structure of a packet that carries a message according to an embodiment of this application;
FIG. 7 is a block diagram of a communication apparatus according to an embodiment of this application;
FIG. 8 is another block diagram of a communication apparatus according to an embodiment of this application; and
FIG. 9 is a diagram of a chip system according to an embodiment of this application.

### DESCRIPTION OF EMBODIMENTS

For ease of understanding technical solutions of this application, the following describes terms in this application.
1. TCP/IP-based data transmission: When a node A transmits data to a node B based on a TCP/an IP, the node A copies data in a memory to a kernel buffer by using a CPU, and adds a header of each layer (for example, a TCP header or an IP header) and a check code to the data by using a TCP/IP protocol stack. Then, a network interface card of the node A copies processed data in the kernel buffer to a buffer of the network interface card and send the processed data to the node B over a physical link. After receiving the processed data, the node B performs a process reverse to that of the node A, and obtains the data through parsing.
2. RDMA-based data transmission: Data is transmitted from a memory area to another memory area through direct memory access between network adapters, without a need of CPU intervention. When a node A transmits data to a node B based on RDMA, the node A writes the data into a memory buffer of the node A, and sends an address and a length of the memory buffer to the node B. After receiving the address and the length of the memory buffer, the node B reads data from the corresponding address and writes the data into a memory buffer of the node B. Further, the node B sends a confirm message to the node A, to indicate, to the node A, that the data has been successfully received. The foregoing node may be understood as a client side device.
3. Transmission channel: The transmission channel is generally a logical channel for communication, or is referred to as a transmission link, a transmission channel, or the like, and refers to a path for transmission of service data (briefly referred to as data below) between two client side devices. One or more transmission channels may exist between the two client side devices. Transmission distances (or transmission delays) of the plurality of transmission channels may be different or the same.
4. Queue pair (queue pair, QP): Two client side devices communicate with each other by using the QP. One QP includes one send queue (send queue, SQ), one receive queue (receive queue, RQ), a corresponding send completion queue (send completion queue, SCQ), and a corresponding receive completion queue (receive completion queue, RCQ). When sending a request, a transmit end client side device encapsulates the request into a work queue element (work queue element, WQE) and sends the work queue element to an SQ, and then, an RDMA network interface card sends the WQE. When the WQE is complete, a completion queue element (completion queue element, CQE) is placed in a corresponding SCQ, and the CQE in the SCQ may be used to determine whether the corresponding WQE is successfully sent.

A depth of each queue (for example, an SQ or an RQ) indicates a maximum quantity of message blocks that can be included in the queue, and the message block may be an RDMA message block. That is, a depth of the send queue may be understood as a maximum quantity of message blocks that can be included in the send queue.

During actual implementation, one transmission channel may correspond to one or more queue pairs, and depths of send queues in the queue pairs may be the same or different.
5. Block size: One SQ may include one or more message blocks, and the block size indicates a size (size) of each message block.
6. Hard channel: The hard channel is a transmission channel through which a service is transmitted without congestion. A transmission delay of the hard channel is slightly affected or not affected by a data traffic volume. In other words, the transmission delay of the hard channel may be approximately considered to be fixed and unchanged. The hard channel may be, for example, an OTN channel or a transmission channel between two optical modules (for example, ZR colored optical modules). ZR represents a longest distance (Ze best Range), and the ZR colored optical module represents an optical module that supports a maximum transmission distance of 80 kilometers on a single-mode optical fiber.
7. Soft channel: The soft channel is a transmission channel in which congestion may occur on a service during transmission. Therefore, a transmission delay of the soft channel is greatly affected by a data traffic volume. In other words, the transmission delay of the soft channel is not fixed, and may fluctuate greatly. The soft channel may be, for example, an IP channel or a multipath label switching (multipath label switching, MPLS) channel.

As described above, standardization of hardware devices with computational power and algorithm models and maturity of software technologies such as artificial intelligence and cloud computing bring an explosive data growth and pose new challenges and requirements on data transmission. For example, scenarios such as artificial intelligence (artificial intelligence, AI) training and inference, industrial simulation, drug research and development, gene sequencing, animation rendering, and meteorology and environmental protection require huge computational power. Computational power of an internet data center (internet data center, IDC) of an enterprise is limited, and cannot meet requirements of quick product simulation and verification. Massive compute resources in a cloud server need to be used to accelerate data processing efficiency. However, a current data magnitude is large. An autonomous-driving road test vehicle is used as an example. A data volume of daily vehicle training samples is several terabytes (terabytes, TBs) to dozens of TBs. Long-distance transmission of the data may need to be performed a plurality of times between the cloud server and the IDC of the enterprise. An example in which the cloud server is a node A, and the IDC of the enterprise is a node B is used. When data transmission is performed between the node A and the node B based on RDMA and a data volume is large, the node A needs to send data to the node B a plurality of times. Generally, the node A sends data next time only after receiving a confirm message sent by the node B. When a distance between the node A and the node B is long, a transmission delay between the node A and the node B causes the node A receiving the confirm message only after specific duration, and the node A generally does not transmit data to the node B in the duration of waiting for the confirm message, causing a decrease of a throughput and a waste of bandwidth resources.

To increase a throughput during long-distance data transmission, embodiments of this application provide a parameter determining method, and a communication apparatus and system. The communication system includes a first DC and a second DC, and data transmission may be performed between the first DC and the second DC through an optical transport network (optical transport network, OTN). Each DC includes at least one client side device. A client side device in a transmit end DC is connected to a client side device in a receive end DC through a first transmission device and a second transmission device. A transmission delay between the first transmission device and the client side device in the transmit end DC, and a transmission delay between the client side device in the receive end DC and the second transmission device may be ignored. In embodiments of this application, a transmission device may determine a transmission distance and/or a transmission delay of a transmission channel between the first DC and the second DC, where the transmission channel is for data transmission. Then, the transmission device notifies the client side device of the transmission distance and/or the transmission delay of the transmission channel, so that the client side device adjusts a sending parameter based on the transmission distance and/or the transmission delay, to adjust a throughput when data transmission is performed through the transmission channel.

The following describes the technical solutions of this application with reference to accompanying drawings.

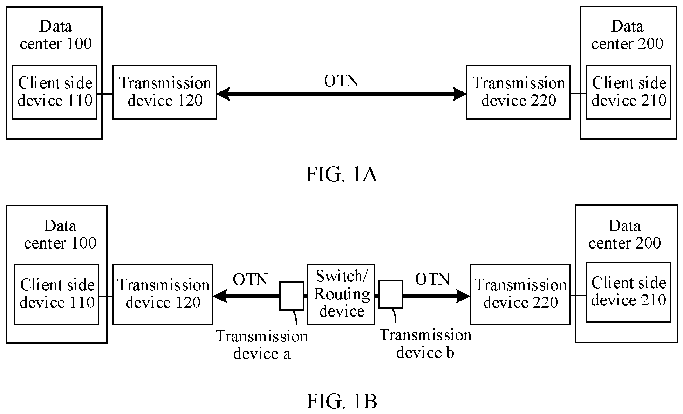

FIG. 1A and FIG. 1B are diagrams of architectures of a communication system according to an embodiment of this application. As shown in FIG. 1A, the communication system includes a data center 100 and a data center 200. The data center 100 includes a client side device 110, and the data center 200 includes a client side device 210. The client side device 110 is connected to the client side device 210 sequentially through a transmission device 120 and a transmission device 220. Data transmission is performed between the data center 100 and the data center 200 through an OTN network, or data transmission is performed between the data center 100 and the data center 200 through an optical module. More specifically, the client side device 110 sends to-be-transmitted data to the transmission device 220 through the transmission device 120, and the client side device 210 obtains the data from the transmission device 220 and performs storage and/or calculation. The client side device may include a storage device and/or a compute device. More specifically, the client side device may be a device like a terminal device, a single host server, a multi-virtual machine server, a conventional layer-3 switch, or a gateway. The transmission device may include a device like an OTN device, a synchronous digital hierarchy (synchronous digital hierarchy, SDH) device, or a packet transport network (packet transport network, PTN) device that may perform data transmission through an optical transport network.

In some implementations, at least one switch or routing device is included between the data center 100 and the data center 200, so that a transmission channel between the data center 100 and the data center 200 is divided into at least two sub transmission channels, as shown in FIG. 1B. For example, the switch or the routing device may separately perform data transmission with the transmission device 120 through a transmission device a, and perform transmission with the transmission device 220 through a transmission device b. For example, when the transmission channel between the data center 100 and the data center 200 includes the at least two sub transmission channels, the transmission channel may be considered as a soft channel.

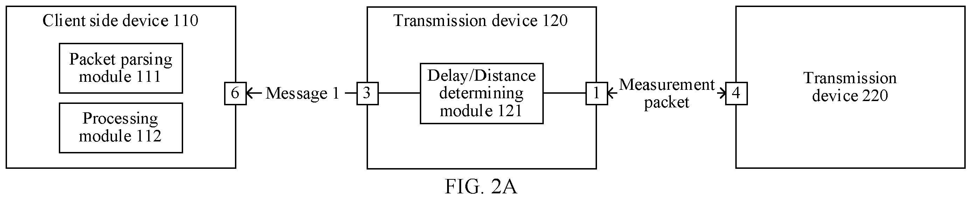

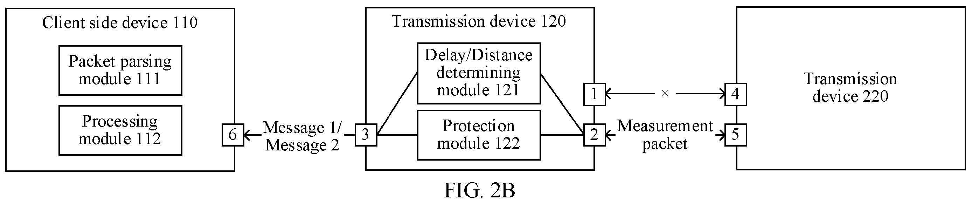

Based on the application scenarios shown in FIG. 1A and FIG. 1B, an embodiment of this application provides an architecture of a communication system, which is specifically shown in FIG. 2A and FIG. 2B. As shown in FIG. 2A, a client side device 110 may include a packet parsing module 111 and a processing module 112, and a transmission device 120 includes a delay/distance determining module 121. The transmission device 120 performs transmission of a measurement packet with a port 4 of a transmission device 220 through a port 1, to determine a transmission distance and/or a transmission delay between the transmission device 120 and the transmission device 220. The transmission distance and/or the transmission delay may be approximately considered as a transmission distance and/or a transmission delay between a data center 100 and a data center 200. For example, the transmission device 120 includes, in a measurement packet 1, information about a moment t1 at which the measurement packet 1 is sent, and the transmission device 220 receives the measurement packet 1 and records a moment t2 at which the measurement packet 1 is received. Further, the transmission device 220 sends a measurement packet 2 in response to the measurement packet 1, and includes, in the measurement packet 2, information about the moment t2 at which the measurement packet 1 is received and a moment t3 at which the measurement packet 2 is sent. When or after the transmission device 120 receives the measurement packet 2 at a moment t4 through the port 1, the delay/distance determining module 121 determines a one-way transmission delay Tdelay and/or a transmission distance S between the transmission device 120 and the transmission device 220 based on the measurement packet 2. Tdelay=[(t2-t1)+(t4-t3)]/2. When a transmission channel between the transmission device 120 and the transmission device 220 is a hard channel, S=Tdelay×c, where c is a transmission speed of the transmission channel. When or after the delay/distance determining module 121 determines the transmission delay and/or the transmission distance, the transmission device 120 generates a message 1 based on the transmission delay and/or the transmission distance, and sends the message 1 to a port 6 of the client side device 110 through a port 3. The message 1 indicates the transmission distance and/or the transmission delay between the data center 100 and the data center 200. The client side device 110 receives the message 1, parses the message 1 through the packet parsing module 111, and obtains the transmission delay and/or the transmission distance. Further, the processing module 112 determines a sending parameter based on the transmission delay and/or the transmission distance.

In some implementations, at least one switch or routing device exists between the transmission device 120 and the transmission device 220, and the transmission channel between the transmission device 120 and the transmission device 220 is divided into a plurality of sub transmission channels. In this case, transmission devices of the sub transmission channels determine transmission delays and/or transmission distances of sub transmission channels corresponding to the transmission devices, and sequentially report the transmission delays and/or the transmission distances to the transmission device 120. The architecture shown in FIG. 1B is used as an example. The transmission device b may determine a transmission delay and/or a transmission distance of a sub transmission channel 1 between the transmission device b and the transmission device 220, and send the transmission delay and/or the transmission distance to the transmission device a. The transmission device a may include the transmission delay and/or the transmission distance of the sub transmission channel 1 in a measurement packet to be sent by the transmission device a to the transmission device 120. In this way, the transmission device 120 may determine a transmission delay and/or a transmission distance of a sub transmission channel 2 between the transmission device 120 and the transmission device a based on the measurement packet, and may obtain the transmission delay and/or the transmission distance of the sub transmission channel 1 from the measurement packet. In this way, the transmission device 120 may determine the transmission delay and/or the transmission distance between the transmission device 120 and the transmission device 220 based on the transmission delay and/or the transmission distance of the sub transmission channel 1 and the transmission delay and/or the transmission distance of the sub transmission channel 2.

In some implementations, two or more transmission channels exist between the transmission device 120 and the transmission device 220. For example, as shown in FIG. 2B, a transmission channel 1 between a port 1 and a port 4 and a transmission channel 2 between a port 2 and a port 5 exist between a transmission device 120 and a transmission device 220. When determining that the transmission channel 1 is faulty, a protection module 122 of the transmission device 120 may switch the transmission channel 1 to the transmission channel 2, that is, switch a communication port between the transmission device 120 and the transmission device 220 from the port 1 to the port 2. Further, a delay/distance determining module 121 of the transmission device 120 determines a transmission delay and/or a transmission distance of the transmission channel 2 based on a measurement packet received through the port 2, and notifies a client side device 110 of the transmission delay and/or the transmission distance of the transmission channel 2 by using the message 1. For example, after the protection module 122 switches the transmission channel, the transmission device 120 may further send a message 2 to the client side device 110, to notify the client side device of the switching of the transmission channel.

It may be understood that FIG. 2A and FIG. 2B are described by using an example in which the data center 100 is a data transmit end. When the data center 200 is the data transmit end, for actions performed by the transmission device 220 and the client side device 210, refer to the descriptions of the foregoing embodiments.

In some implementations, the client side device may have two or more service paths, and the service paths are carried by different transmission channels. A high bit error rate of data during transmission may cause a data packet loss, and the packet loss causes rate reduction of a service running on the client side device. Therefore, in a process in which the data center 100 sends data to the data center 200, the transmission device 220 may determine a bit error rate of the service path based on a received signal, and then send information about the bit error rate to the transmission device 120. The transmission device 120 may directly notify the client side device 110 of the bit error rate. Alternatively, when the bit error rate is greater than or equal to a bit error rate threshold, the transmission device 120 notifies the client side device 110 of the bit error rate. Further, when the bit error rate is greater than or equal to the bit error rate threshold, the client side device may switch the service path.

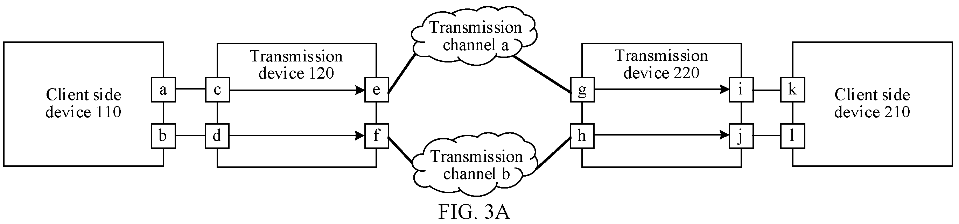

In an example, as shown in FIG. 3A, a client side device is connected to a transmission device through two independent ports. Further, the transmission device is connected to different transmission channels through two ports, and the transmission channels are used to carry different service paths on the client side device. For example, a port a of a client side device 110 is interconnected to a transmission channel a through a port c and a port e of a transmission device 120, and a port b of the client side device 110 is interconnected to a transmission channel b through a port d and a port f of the transmission device 120. For example, when a bit error rate of a service path corresponding to the transmission channel a is greater than or equal to a bit error rate threshold, the client side device may schedule the port d and the port f of the transmission device 120 for data transmission, to switch the service path.

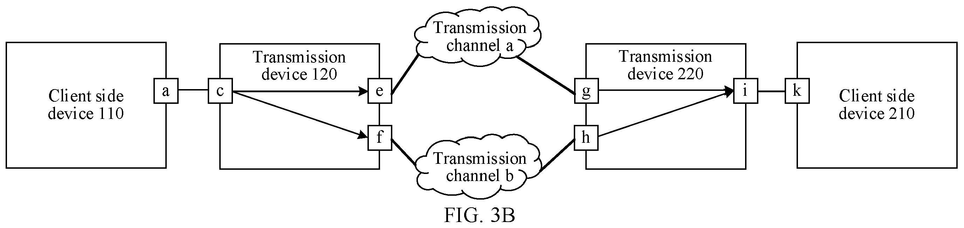

In another example, as shown in FIG. 3B, a client side device is connected to a transmission device through one port. Further, the transmission device is connected to different transmission channels through two ports, and the transmission channels are used to carry different service paths. A port a of a client side device, for example, a client side device 110 is interconnected to a transmission channel a through a port c and a port e of a transmission device 120, and the client side device 110 is interconnected to a transmission channel b by reusing the port a and the port c and through a port f of the transmission device 120. For example, when a bit error rate of a service path corresponding to the transmission channel a is greater than or equal to a bit error rate threshold, the client side device schedules, by modifying information such as an IP address or a virtual local area network identifier (virtual local area network identifier, VLAN ID), the port f of the transmission device 120 for data transmission, to switch the service path.

The port e and the port 1 that is in FIG. 2A and FIG. 2B may be a same port or different ports, a port g and the port 4 that is in FIG. 2A and FIG. 2B may be a same port or different ports, the port f and the port 2 that is in FIG. 2A and FIG. 2B may be a same port or different ports, and a port h and the port 5 that is in FIG. 2A and FIG. 2B may be a same port or different ports.

In some implementations, the client side device may exchange information with the transmission device through a device like a switch or a routing device that can implement route forwarding. For example, the switch or the routing device may receive a message 1, and forward the message 1 to the client side device. Alternatively, the switch or the routing device may obtain a transmission delay and/or a transmission distance from a message 1, and perform traffic management based on the transmission delay and/or the transmission distance, for example, set a triggering threshold XON and a stopping threshold XOFF for priority-based flow control (priority-based flow control, PFC) backpressure.

It should be understood that the systems shown in FIG. 1A and FIG. 1B to FIG. 3A and FIG. 3B are merely examples for description. During specific implementation, one data center may include more client side devices and/or transmission devices, or one data center may include one or more switches, and one or more switches or routing devices may be included between two data centers. In addition, each device may include more or fewer modules, ports, and the like. This is not specifically limited in embodiments of this application.

The foregoing describes the communication systems provided in embodiments of this application with reference to FIG. 1A and FIG. 1B to FIG. 3A and FIG. 3B. The following describes in detail the parameter determining method provided in embodiments of this application.

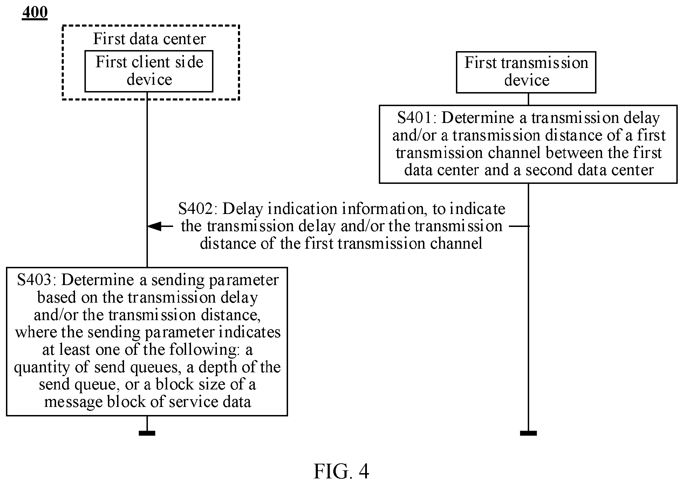

FIG. 4 is an example flowchart of a parameter determining method according to an embodiment of this application. The method may be applied to the system shown in any one of FIG. 1A and FIG. 1B to FIG. 3A and FIG. 3B. A first data center may be a data transmit end, for example, may be the data center 100 or the data center 200. A first transmission device may be a transmission device in a transmit end data center, or may be a transmission device in a receive end data center. The following uses an example in which the first transmission device is a transmission device in a data transmit end (that is, the first data center) for description. For example, a first client side device may be a client side device, or may be a component (for example, a chip or a chip system) of the client side device. The first transmission device may be a transmission device, or may be a component (for example, a chip or a chip system) of the transmission device. More specifically, the method 400 shown in FIG. 4 may include S401 to S403.

S401: The first transmission device determines a transmission delay and/or a transmission distance of a first transmission channel between the first data center and a second data center.

For example, the first transmission channel may be any one of at least one transmission channel established between the first data center and the second data center. The first transmission device may determine the transmission delay and/or the transmission distance of the first transmission channel based on a request or an indication of the first client side device.

In an example, if the first transmission channel is a hard channel, the first transmission device may determine the transmission delay and/or the transmission distance of the first transmission channel. In another example, the first transmission channel is a soft channel, to be specific, the first transmission channel includes a plurality of sub transmission channels, and two adjacent sub transmission channels are connected through a routing device or a switch. In this case, the first transmission device may determine only the transmission delay of the first transmission channel. In this case, the transmission delay of the first transmission channel includes a transmission delay of each of the plurality of sub transmission channels.

For example, for a specific implementation in which the first transmission device determines the transmission delay and/or the transmission distance, refer to the descriptions of the corresponding part in FIG. 2A and FIG. 2B. Details are not described herein again.

In some implementations, before S401 is performed, the first transmission device determines that a second transmission channel is faulty, and switches the second transmission channel to the first transmission channel.

S402: The first transmission device sends delay indication information to the first client side device, to indicate the transmission delay and/or the transmission distance of the first transmission channel.

For example, the delay indication information may include the message 1 in the foregoing embodiments.

For example, the delay indication information may be in a type-length-value (type-length-value, TLV) format.

In some implementations, the delay indication information further indicates bandwidth of the first transmission channel, and the bandwidth is used to determine a sending parameter.

In some implementations, the delay indication information further indicates that a networking type between the first data center and the second data center is a hard channel or a soft channel.

In some implementations, the first transmission channel includes the plurality of sub transmission channels, and the transmission delay of the first transmission channel may include the transmission delay of each of the plurality of sub transmission channels.

S403: The first client side device determines the sending parameter based on the transmission delay and/or the transmission distance, where the sending parameter indicates at least one of the following: a quantity of send queues, a depth of the send queue, or a block size of a message block of service data.

The service data is data to be transmitted through the first transmission channel from the first client side device, and the send queue is a queue of the first client side device when the service data is sent through the first transmission channel. For example, the send queue may be a send queue configured when the first client side device sends the service data through the first transmission channel.

In some implementations, the first client side device receives bit error information from the first transmission device, where the bit error information indicates a bit error rate of a second transmission channel between the first data center and the second data center. When the bit error rate is greater than or equal to a bit error rate threshold, the first client side device controls to switch the second transmission channel to the first transmission channel.

For example, the bit error rate threshold may be 20%, 25%, or another value. For example, the bit error rate threshold may be determined based on a specific service.

That the first client side device controls switching of a transmission channel may include: The first client side device switches a service path, to switch the transmission channel.

In some implementations, data transmission is performed between the first data center and the second data center based on an RDMA protocol.

It should be noted that, in this application, that information is sent/received between the first client side device and the first transmission device may include: The first client side device directly sends the information to the first transmission device, and/or the first client side device receives the information directly sent by the first transmission device, that is, there is no other intermediate device between the two devices to forward a message. Alternatively, that information is sent/received between the first client side device and the first transmission device may include: The first client side device sends the information to the first transmission device through at least one intermediate device, and/or the first client side device receives, through the at least one intermediate device, the information sent by the first transmission device, where the at least one intermediate device may be one or more of a routing device, a transmission device, or a switch.

It should be further noted that, that the first transmission device may be a transmission device in the transmit (or receive) end data center may be understood as that in comparison with a transmission delay and/or a transmission distance between a client side device in the transmit end data center and a client side device in the receive end data center, a transmission delay between the first transmission device and the client side device that is in the transmit (or receive) end data center is very small and/or a transmission distance between the first transmission device and the client side device that is in the transmit (or receive) end data center is very short, and may be ignored.

According to the parameter determining method provided in this embodiment of this application, a throughput of data transmission between data centers is increased, thereby helping improve efficiency of long-distance data transmission.

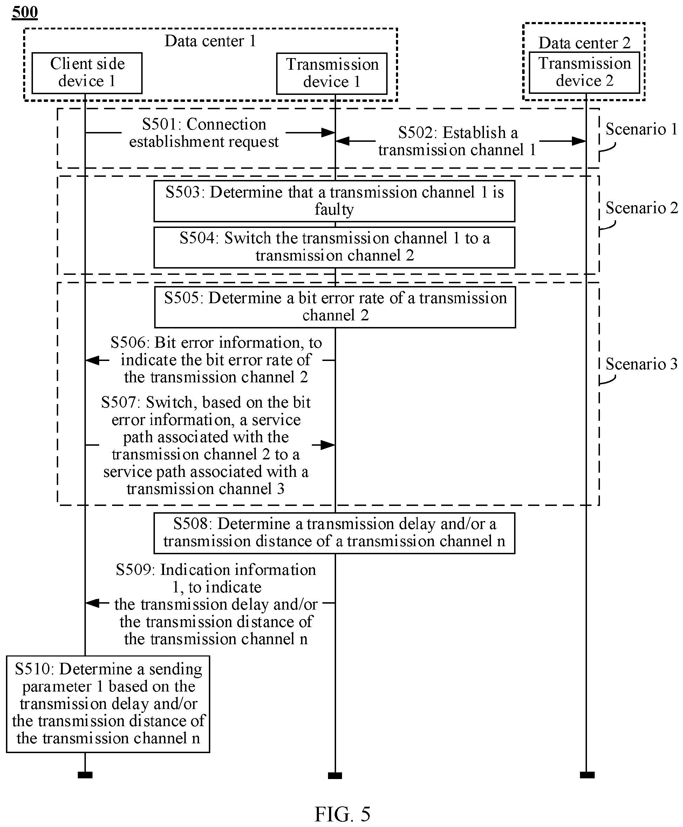

FIG. 5 is another example flowchart of a parameter determining method according to an embodiment of this application. The method 500 in FIG. 5 may be considered as an extension or further descriptions of the method 400. A data center 1 may be considered as an example of the first data center, a data center 2 may be considered as an example of the second data center, a client side device 1 may be considered as an example of the first client side device, and a transmission device 1 may be considered as an example of the first transmission device. The method 500 may include a part or all of steps S501 to S510.

In a scenario (for example, a scenario 1), if no transmission channel is established between the transmission device 1 and a transmission device 2, S501 and S502 may be performed to establish a transmission channel.

S501: The client side device 1 sends a connection establishment request to the transmission device 1.

The connection establishment request is used to request to establish a transmission channel with a client side device 2 in the data center 2.

In an example, the connection establishment request may include destination address information, for example, a media access control (media access control, MAC) address, an IP address, or other information that can identify the client side device 2.

In another example, the connection establishment request may further include information about expected bandwidth of the transmission channel.

S502: The transmission device 1 establishes a transmission channel 1 with the transmission device 2 based on the connection establishment request.

For example, the transmission device 1 may establish the transmission channel 1 through a network management system and/or a controller. The network management system and/or the controller may store information about a plurality of "client side device-transmission device" pairs. A transmission device in each "client side device-transmission device" pair is connected to a client side device, and the transmission device is configured to provide a transmission service for the client side device. The information about the plurality of "client side device-transmission device" pairs includes information related to the client side device 1 and the client side device 2. Further, the transmission device 1 sends the connection establishment request to the network management system and/or the controller. The network management system and/or the controller determine/determines, based on the information about the client side device 2 in the connection establishment request, the transmission device 2 configured to provide a transmission service for the client side device 2, and then the network management system and/or the controller establish/establishes the transmission channel 1 between the transmission device 1 and the transmission device 2.

A type of the transmission channel 1 is related to a type of the transmission device. For example, if the transmission device 1 and the transmission device 2 are OTN devices, the transmission channel 1 may be an optical service unit (optical service unit, OSU) channel, or may be an optical data unit k (Optical Data Unit k, ODUk) channel. If the transmission device 1 and the transmission device 2 are SDH devices, the transmission channel 1 may be a virtual container (virtual container, VC) channel. If the transmission device 1 and the transmission device 2 are PTN devices, the transmission channel 1 may be an MPLS channel.

For example, bandwidth of the transmission channel 1 is bandwidth that may be pre-negotiated between the transmission device 1 and the transmission device 2, or may be the expected bandwidth of the transmission channel determined based on the connection establishment request.

In some implementations, after the transmission channel 1 is established, the transmission device 1 may notify the client side device 1 that the transmission channel 1 is successfully established, and notify the client side device 1 of the bandwidth of the transmission channel 1.

After the transmission channel 1 is established between the transmission device 1 and the transmission device 2, the transmission device 1 may determine a transmission delay and/or a transmission distance of the transmission channel 1. That is, after S502 is performed, S508 to S510 are performed. It may be understood that, when S508 to S510 are performed after S502, a transmission channel n may be the transmission channel 1.

In another scenario (for example, a scenario 2), when the transmission device 1 communicates with a transmission device 2 through a transmission channel 1, if the transmission channel 1 is faulty, the transmission device 1 may switch a transmission channel. Details are described in S503 and S504.

S503: The transmission device 1 determines that the transmission channel 1 is faulty.

For example, the transmission device 1 determines, based on received fault indication information, that the transmission channel 1 is faulty, where the fault indication information may be, for example, loss of signal (loss of signal, LOS) alarm information.

S504: The transmission device 1 switches the transmission channel 1 to a transmission channel 2.

For example, the transmission device 1 reports the fault to a protection module by using an interrupt, and the protection module switches the transmission channel from the transmission channel 1 to the transmission channel 2.

After switching the transmission channel to the transmission channel 2, the transmission device 1 may determine a transmission delay and/or a transmission distance of the transmission channel 2. That is, after S504 is performed, S508 to S510 are performed. It may be understood that, when S508 to S510 are performed after S504, a transmission channel n may be the transmission channel 2. In this implementation, the transmission channel 1 may be considered as an example of the second transmission channel in the method 400, and the transmission channel 2 may be considered as an example of the first transmission channel in the method 400.

In some implementations, S503 and S504 may be performed synchronously with S508 to S510. In this case, the transmission channel n in S508 to S510 is the transmission channel 1. To be specific, after the transmission channel 1 is established between the transmission device 1 and the transmission device 2, the transmission device 1 determines a transmission distance and/or a transmission delay of the transmission channel 1, and the transmission device 1 monitors whether the transmission channel 1 is faulty.

In still another scenario (for example, a scenario 3), when the transmission device 1 communicates with a transmission device 2 through a transmission channel 2, the client side device 1 may monitor a bit error rate of a transmission channel. When the bit error rate is greater than or equal to a bit error rate threshold, the client side device 1 may switch a service path. Details are described in S505 to S507.

S505: The transmission device 1 determines a bit error rate of the transmission channel 2.

For example, the transmission device 1 determines the bit error rate of the transmission channel 2 based on information sent by the transmission device 2.

In some implementations, the transmission device 1 sends data to the transmission device 2 by using an OTN frame, and the transmission device 2 may determine the bit error rate of the transmission channel 2 based on a bit error bit like a bit interleaved parity-8 (a bit interleaved parity-8, BIP-8) code or forward error correction (forward error correction, FEC) in overheads of the OTN frame. Further, the transmission device 2 notifies a transmission device of the bit error rate of the transmission channel 2. For example, the transmission device 2 may indicate, to the transmission device 1 by using a backward error indication (Backward Error Indication, BEI) of the OTN frame, that a bit error occurs in the transmission channel 2. Further, the transmission device 2 may notify the transmission device 1 of the bit error rate of the transmission channel 2 in an in-band transmission manner, for example, by including information about the bit error rate in a customized bit error communication protocol packet.

S506: The transmission device 1 sends bit error information to the client side device 1, to indicate the bit error rate of the transmission channel 2.

For example, the bit error information may be carried in an in-band packet.

S507: The client side device 1 switches, based on the bit error information, a service path associated with the transmission channel 2 to a service path associated with a transmission channel 3.

When the bit error information indicates that the bit error rate of the transmission channel 2 is greater than or equal to the bit error rate threshold, the client side device 1 switches a current service path to a target service path. The current service path is carried by the transmission channel 1, and the target service path is carried by the transmission channel 2.

In an example, the client side device 1 is connected to the transmission device 1 through M independent ports, the transmission device 1 is connected to M transmission channels through the M ports, each transmission channel carries one service path, and M is an integer greater than or equal to 2. In other words, ports through which the client side device 1 is connected to different transmission channels through the transmission device 1 do not overlap. The client side device 1 may send data to the transmission device 1 through different ports, so that the transmission device 1 transmits the data to the transmission device 2 over different service paths corresponding to the ports. For example, when the client side device 1 determines that the bit error rate of the transmission channel 2 is greater than or equal to the bit error rate threshold, the client side device 1 may send data to the transmission device 1 through a port corresponding to the service path associated with the transmission channel 3. When receiving the data transmitted through the port corresponding to the service path associated with the transmission channel 3, the transmission device 1 sends the data to the transmission device 2 through the transmission channel 3.

In another example, the client side device 1 is connected to the transmission device 1 through one port, and the transmission device 1 is connected to M transmission channels through M ports. In other words, M service paths are for implementing data transmission between the client side device 1 and the transmission device 1 through port reusing. A packet transmitted by the client side device 1 to the transmission device 1 may include a plurality of fields. Each of the plurality of fields corresponds to one service path (IP addresses or VLAN addresses of the fields are different). For example, a field 1 is used to carry data of the service path associated with the transmission channel 2, and a field 2 is used to carry data of the service path associated with the transmission channel 3. The client side device 1 may include data in one or more fields, to indicate the transmission device 1 to perform data transmission through a transmission channel corresponding to the one or more fields. For example, the client side device 1 may include data in the field 1, to indicate the transmission device 1 to perform data transmission through the transmission channel 2. When determining that the bit error rate of the transmission channel 2 is greater than or equal to the bit error rate threshold, the client side device 1 may perform switching from the field 1 to the field 2 to include the data, to complete service path switching.

It should be understood that the transmission channel is switched with the service path switching.

After determining that the transmission channel is switched to the transmission channel 3, the transmission device 1 may determine a transmission delay and/or a transmission distance of the transmission channel 3. That is, after S507 is performed, S508 to S510 are performed. It may be understood that, when S508 to S510 are performed after S507, a transmission channel n may be the transmission channel 3. In this implementation, the transmission channel 2 may be considered as an example of the third transmission channel in the method 400, and the transmission channel 3 may be considered as an example of the first transmission channel in the method 400.

In some implementations, S505 to S507 may be performed synchronously with S508 to S510. In this case, the transmission channel n in S508 to S510 is the transmission channel 2. To be specific, after switching the transmission channel to the transmission channel 2, the transmission device 1 determines a transmission distance and/or a transmission delay of the transmission channel 2, and notifies the client side device 1 of the bit error rate of the transmission channel 2, so that the client side device 1 determines whether to switch the service path.

In some other implementations, S505 to S507 may alternatively be performed after S508 to S510. For example, the transmission device 1 may determine transmission delays and/or transmission distances of a plurality of transmission channels between the data center 1 and the data center 2. In a process in which the data center 1 performs data transmission through a transmission channel, the transmission device 1 may detect a bit error rate of the transmission channel and report the bit error rate to the client side device 1. When determining that the bit error rate of the transmission channel is high, the client side device 1 may perform switching to another transmission channel with a known transmission delay and/or a known transmission distance for data transmission.

S508: The transmission device 1 determines a transmission delay and/or a transmission distance of the transmission channel n.

For example, for a specific implementation in which the transmission device 1 determines the transmission delay and/or the transmission distance, refer to the descriptions of the corresponding part in FIG. 2A and FIG. 2B. Details are not described herein again.

In some implementations, before S508 is performed, the transmission device 1 receives a query request sent by the client side device, where the query request is used to request the transmission device 1 to determine a transmission delay and/or a transmission distance of a target transmission channel. The target transmission channel may be understood as a transmission channel subsequently for data transmission, for example, the transmission channel n.

S509: The transmission device 1 sends indication information 1 to the client side device 1, to indicate the transmission delay and/or the transmission distance of the transmission channel n.

S510: The client side device 1 determines a sending parameter 1 based on the transmission delay and/or the transmission distance of the transmission channel n.

The sending parameter 1 indicates at least one of the following: a quantity of send queues and/or a depth of the send queue when the client side device 1 transmits data through the transmission channel n, or a block size of a message block of data. The sending parameter 1 may be considered as an example of the sending parameter in the method 400.

For example, after determining the sending parameter 1, the client side device 1 configures the sending parameter 1 to a network interface card, so that the client side device 1 can perform transmission based on the sending parameter 1 when performing data transmission through the transmission channel n.

In some implementations, the indication information 1 indicates the transmission distance of the transmission channel n, and the client side device determines the transmission delay based on the transmission distance.

For example, the client side device 1 may determine the sending parameter 1 based on bandwidth and the transmission delay of the transmission channel n. An example in which at least one send queue each has a same depth is used. The block size of the message block, the quantity of send queues, and the depth of the send queue may satisfy the following formula: $BW = m \times S \times N / T {′}_{delay}$

m is a maximum quantity of message blocks included in one send queue, S is a size of one message block of the data, N is the quantity of send queues, and T'_{delay} represents a round-trip transmission delay of the transmission channel n. BW may be the bandwidth of the transmission channel n, or the BW may be a part of the bandwidth of the transmission channel n, for example, 95% of the bandwidth of the transmission channel n or 90% of the bandwidth of the transmission channel n. It may be understood that the maximum quantity of message blocks included in one send queue is adjusted by adjusting a depth of the send queue.

In an example, if a quantity of send queues corresponding to the transmission channel n and a depth of each send queue are pre-negotiated or fixed, the client side device 1 may determine the block size based on the transmission delay and/or the transmission distance of the transmission channel n.

In another example, if the block size of the message block and a depth of each send queue are pre-negotiated or fixed, the client side device 1 may determine a maximum quantity of included message blocks based on the transmission delay and/or the transmission distance of the transmission channel n.

In still another example, if a quantity of send queues corresponding to the transmission channel n and the block size of the message block are pre-negotiated or fixed, the client side device 1 may determine a depth of the send queue based on the transmission delay and/or the transmission distance of the transmission channel n.

For example, information (such as the indication information 1 and the bit error information) sent by the transmission device 1 to the client side device 1 may be constructed in a TLV format. A TLV message, as a payload for transmission, may be carried in a protocol having a TLV carrying capability. The protocol having the TLV carrying capability may be, for example, a control plane protocol like a link layer discovery protocol (link layer discovery protocol, LLDP), a label distribution protocol (label distribution protocol, LDP), an open shortest path first (open shortest path first, OSPF) protocol, or a border gateway protocol (border gateway protocol, BGP).

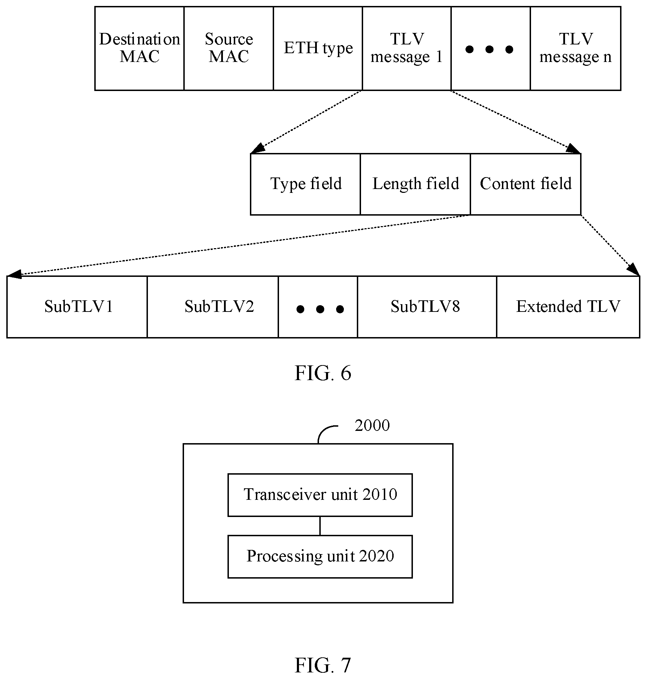

FIG. 6 is a diagram of a structure of a packet of information transmitted based on an extended LLDP. As shown in FIG. 6, the information includes a destination MAC field, a source MAC field, an Ethernet (ethernet, ETH) type field, and n TLV messages fields, where n may be an integer greater than or equal to 1. The destination MAC field indicates a MAC address on an information receiving side, the source MAC field indicates a MAC address on an information sending side, the ETH type field indicates that the information is sent based on the LLDP protocol, and each TLV message field includes a type field, a length field, and a content field. The content field is used to carry specific information, the length field indicates a length of information in the content field, and the type field indicates a type of the information in the content field. In some implementations, the content field in the TLV message field may further include a plurality of subTLV message fields, for example, subTLV1 to subTLV8. In an example, one or more content fields in the subTLV1 to the subTLV8 are used to carry information sent by a transmission device 1 to a client side device 1, for example, one or more of a transmission delay and/or a transmission distance of a transmission channel, a networking type between data centers, bit error information, fault indication information, or bandwidth of the transmission channel. In another example, the content field in the TLV message field may further include an extended TLV field, and the extended TLV field is used to carry the information sent by the transmission device 1 to the client side device 1. An example in which the information sent by the transmission device 1 to the client side device 1 is the bit error information is used. A subTLVn (where n is any value from 1 to 8) field or a type field in the extended TLV field may be used to define an information type of the bit error information, for example, a bit error absolute value and/or a bit error ratio, and a length field in the extended TLV field is used to define an information length of the content field. If the information type defined by using the type field is the bit error absolute value, content carried in the content field is the bit error absolute value. If the information type defined by using the type field is the bit error ratio, content carried in the content field is the bit error ratio.

It should be understood that FIG. 6 is merely an example for description. During actual implementation, related information transmission may be performed between the transmission device 1 and the client side device 1 based on a management plane protocol or another protocol.

During specific implementation, information transmission may be performed between the client side device 1 and the transmission device 1 through at least one routing device or switch. When the at least one routing device or switch exists between the client side device 1 and the transmission device 1, the at least one routing device or switch may set a triggering threshold XON and a stopping threshold XOFF for PFC backpressure based on a transmission delay and/or a transmission distance of a transmission channel (for example, a transmission channel n) determined by the transmission device 1. For example, the triggering threshold XON and the stopping threshold XOFF for backpressure may satisfy the following formula: $XON = a \times T {′}_{delay} \times bw ;$ and $XOFF = b \times T {′}_{delay} \times bw$

bw is bandwidth of the transmission channel (for example, the transmission channel n), T'_{delay} is a round-trip transmission delay of the transmission channel (for example, the transmission channel n), and a and b are coefficients, where b is greater than a, and a is greater than or equal to 1.

According to the parameter determining method provided in this embodiment of this application, a transmission device notifies a client side device of a transmission delay and/or a transmission distance of a transmission channel, to help the client side device set a parameter for sending data, and increase a throughput of data transmission between data centers, and help improve efficiency of long-distance data transmission. In addition, the client side device and/or the transmission device monitor/monitors a status of the transmission channel in real time. When the transmission channel is faulty or a bit error rate is high, the transmission channel may be switched to another transmission channel. After the transmission channel is switched, the transmission device may measure a transmission delay and/or a transmission distance of a switched transmission channel, so that the client side device adjusts and controls the parameter for sending the data, to help ensure continuity and high efficiency of data transmission.

The foregoing describes the parameter determining methods provided in this application with reference to FIG. 1A and FIG. 1B to FIG. 6. Unless otherwise stated or there is a logic conflict in embodiments of this application, terms and/or descriptions of embodiments are consistent and may be mutually referenced, and technical features in different embodiments may be combined based on an internal logical relationship thereof, to form a new embodiment.

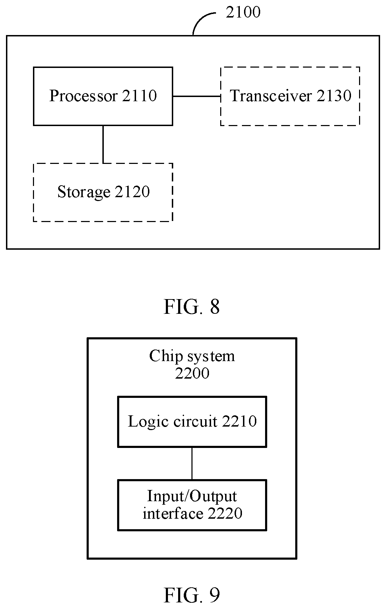

The following describes in detail, with reference to FIG. 7 and FIG. 8, communication apparatuses provided in embodiments of this application. It should be understood that descriptions of apparatus embodiments correspond to the descriptions of the method embodiments. Therefore, for content that is not described in detail, refer to the foregoing method embodiments. For brevity, some content is not described again.

FIG. 7 is a block diagram of a communication apparatus 2000 according to an embodiment of this application. The apparatus 2000 includes a transceiver unit 2010 (or referred to as a transceiver module) and a processing unit 2020 (or referred to as a processing module). The transceiver unit 2010 may be configured to implement a corresponding transceiver function or obtaining function, and the processing unit 2020 may be configured to implement a corresponding processing function.

Optionally, the transceiver unit 2010 may include a sending unit and a receiving unit. The sending unit is configured to perform a sending operation in the foregoing method embodiments. The receiving unit is configured to perform a receiving operation or an obtaining action in the foregoing method embodiments.

In some implementations, the apparatus 2000 may include a receiving module, but does not include a sending module. Alternatively, the apparatus 2000 may include a sending module, but does not include a receiving module.

Optionally, the apparatus 2000 further includes a storage unit. The storage unit may be configured to store instructions and/or data. The processing unit 2020 may read the instructions and/or the data in the storage unit, to cause the apparatus to implement a related action performed by the terminal device in the foregoing method embodiments.

The apparatus 2000 may be configured to perform an action performed by the client side device or the transmission device in the method 400 or the method 500.

When the apparatus 2000 is configured to perform an action performed by a first transmission device, the processing unit 2020 may include the delay/distance determining module 121 in FIG. 2A and FIG. 2B, and may further include the protection module 122.

Specifically, the processing unit 2020 is configured to determine a transmission delay and/or a transmission distance of a first transmission channel between a first data center and a second data center. The transceiver unit 2010 is configured to send delay indication information to the first client side device, where the delay indication information indicates the transmission delay and/or the transmission distance, the transmission delay and/or the transmission distance are/is used to determine a sending parameter, and the sending parameter indicates at least one of the following: a quantity of send queues, a depth of the send queue, or a block size of a message block of service data, where the service data is data to be transmitted through the first transmission channel from the first client side device, and the send queue is a queue of the first client side device when the service data is sent through the first transmission channel.

In some implementations, the processing unit 2020 is configured to: when a second transmission channel between the first data center and the second data center is faulty, and the second transmission channel is switched to the first transmission channel, determine the transmission delay and/or the transmission distance.

In some implementations, the transceiver unit 2010 is further configured to send fault indication information to the first client side device, where the fault indication information indicates that the second transmission channel is faulty, and indicates the first client side device to transmit the service data through the first transmission channel.

In some implementations, the transceiver unit 2010 is configured to send bit error information to the first client side device, where the bit error information indicates a bit error rate of a third transmission channel between the first data center and the second data center, and the bit error rate is used to control switching of the third transmission channel to the first transmission channel.

When the apparatus 2000 is configured to perform an action performed by the first client side device, the processing unit 2020 may include the packet parsing module 111 and the processing module 112 in FIG. 2A and FIG. 2B.

Specifically, the transceiver unit 2010 is configured to receive delay indication information from a first transmission device, where the delay indication information indicates a transmission delay and/or a transmission distance of a first transmission channel between the first DC and a second DC. The processing unit 2020 is configured to determine a sending parameter based on the transmission delay and/or the transmission distance, where the sending parameter indicates at least one of the following: a quantity of send queues, a depth of the send queue, or a block size of a message block of service data, where the service data is data to be transmitted through the first transmission channel from the first client side device, and the send queue is a queue of the first client side device when the service data is sent through the first transmission channel.

In some implementations, the transceiver unit 2010 is further configured to receive bit error information from the first transmission device, where the bit error information indicates a bit error rate of a third transmission channel between the first DC and the second DC. The processing unit 2020 is further configured to: when the bit error rate is greater than or equal to a bit error rate threshold, control to switch the third transmission channel to the first transmission channel.

In some implementations, the transceiver unit 2010 is further configured to receive fault indication information from the first transmission device, where the fault indication information indicates that a second transmission channel between the first DC and the second DC is faulty. The processing unit 2020 is further configured to perform transmission of the service data through the first transmission channel based on the fault indication information.

It should be understood that a specific process of performing the foregoing corresponding step by each unit is described in detail in the foregoing method embodiments, for example, a method for determining a first moment, a method for determining a first time domain unit, and a method for determining a second time domain unit. For brevity, details are not described herein again.

It should be understood that the apparatus 2000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a storage, a merged logic circuit, and/or another appropriate component that supports the described function. In an optional example, a person skilled in the art may understand that the apparatus 2000 may be specifically the communication apparatus in the foregoing embodiments, and may be configured to perform procedures and/or steps corresponding to the communication apparatus in the foregoing method embodiments. To avoid repetition, details are not described herein again.

The apparatus 2000 in each of the foregoing solutions has a function of implementing a corresponding step performed by the communication apparatus (for example, the client side device or the transmission device) in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, the sending unit in the transceiver unit may be replaced by a transmitter, and the receiving unit in the transceiver unit may be replaced by a receiver machine), and another unit, for example, the processing unit, may be replaced by a processor, to separately perform receiving and sending operations and a related processing operation in the method embodiments.

In addition, the transceiver unit 2010 may be a transceiver circuit (for example, may include a sending circuit, or may include a receiver circuit), and the processing unit 2020 may be a processing circuit.

It should be noted that the apparatus in FIG. 7 may be the communication apparatus (for example, the client side device or the transmission device) in the foregoing embodiments, or may be a chip or a chip system, for example, a system on a chip (system on a chip, SoC). The transceiver unit may be an input/output circuit or a communication interface. The processing unit is a processor, a microprocessor, or an integrated circuit integrated on the chip. This is not limited herein.

FIG. 8 is a diagram of another communication apparatus 2100 according to an embodiment of this application. The apparatus 2100 includes a processor 2110. The processor 2110 is coupled to a storage 2120. The storage 2120 is configured to store a computer program or instructions and/or data. The processor 2110 is configured to: execute the computer program or the instructions stored in the storage 2120, or read the data stored in the storage 2120, to perform the methods in the foregoing method embodiments.

Optionally, there are one or more processors 2110.

Optionally, there are one or more storages 2120.

Optionally, the storage 2120 and the processor 2110 are integrated together or disposed separately.

Optionally, as shown in FIG. 8, the apparatus 2100 further includes a transceiver 2130. The transceiver 2130 is configured to: receive and/or send a signal. For example, the processor 2110 is configured to control the transceiver 2130 to receive and/or send the signal.

In an example, the processor 2110 may have a function of the processing unit 2020 shown in FIG. 7, the storage 2120 may have a function of the storage unit, and the transceiver 2130 may have a function of the transceiver unit 2010 shown in FIG. 7.

In a solution, the apparatus 2100 is configured to implement operations performed by the communication apparatus (for example, the client side device or the transmission device) in the foregoing method embodiments.

For example, the processor 2110 is configured to execute the computer program or the instructions stored in the storage 2120, to implement related operations of the communication apparatus in the foregoing method embodiments.

In this embodiment of this application, an antenna and a radio frequency circuit that have a transceiver function may be considered as a transceiver module of a terminal device, and a processor that has a processing function may be considered as a processing module of the terminal device.

In some implementations, the processor 2110 may also be referred to as a processing unit, a processing board, a processing module, a processing apparatus, or the like. The transceiver 2130 may also be referred to as a transceiver unit, a transceiver machine, a transceiver apparatus, or the like.

When the apparatus 2100 is a chip, the chip includes a processor, a storage, and a transceiver. The transceiver may be an input/output circuit or a communication interface. The processor may be a processing module, a microprocessor, or an integrated circuit integrated on the chip. The sending operation in the foregoing method embodiments may be understood as an output of the chip, and the receiving or obtaining operation in the foregoing method embodiments may be understood as an input of the chip.

It should be understood that the processor mentioned in this embodiment of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the storage mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may serve as an external cache. By way of example but not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the storage (a storage module) may be integrated into the processor.

It should be further noted that, the storage described in this specification is intended to include, but is not limited to, these storages and any storage of another appropriate type.

FIG. 9 is a diagram of a chip system 2200 according to an embodiment of this application. The chip system 2200 (or may be referred to as a processing system) includes a logic circuit 2210 and an input/output interface (input/output interface) 2220.

The logic circuit 2210 may be a processing circuit in the chip system 2200. The logic circuit 2210 may be coupled and connected to a storage unit, and invoke instructions in the storage unit, so that the chip system 2200 can implement the methods and functions in embodiments of this application. The input/output interface 2220 may be an input/output circuit in the chip system 2200, and outputs information processed by the chip system 2200, or inputs to-be-processed data or signaling information to the chip system 2200 for processing.

In a solution, the chip system 2200 is configured to implement operations performed by the communication apparatus (for example, the client side device or the transmission device) in the foregoing method embodiments.

For example, the logic circuit 2210 is configured to implement processing-related operations performed by the communication apparatus (for example, the client side device or the transmission device) in the foregoing method embodiments. The input/output interface 2220 is configured to implement sending and/or receiving-related operations performed by the communication apparatus (for example, the client side device or the transmission device) in the foregoing method embodiments.

According to the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, such as a USB flash drive, a removable hard disk drive, a read-only memory, a random access memory, a magnetic disk, or an optical disc.

An embodiment of this application further provides a computer-readable storage medium. The computer-readable storage medium stores computer instructions for implementing the method performed by the communication apparatus (for example, the client side device or the transmission device) in the foregoing method embodiments.

For example, when the computer program is executed by a computer, the computer is caused to implement the method performed by the communication apparatus (for example, the client side device or the transmission device) in the foregoing method embodiments.

An embodiment of this application further provides a computer program product, including instructions. When the instructions are executed by a computer, the method performed by the communication apparatus (for example, the client side device and the transmission device) in the foregoing method embodiments is implemented.

For explanations and beneficial effects of related content of any one of the apparatuses provided above, refer to the corresponding method embodiments provided above. Details are not described herein again.

In descriptions of embodiments of this application, unless otherwise specified, "/" indicates "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more than two. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Prefix words "first", "second", and the like used in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute any limitation on the described objects. For descriptions of the described objects, refer to the context descriptions in claims or embodiments, and the use of such prefix words should not constitute any redundant limitation.

A person of ordinary skill in the art may be aware that, in combination with the examples described in embodiments disclosed in this specification, units and steps may be implemented by electronic hardware or a combination of computer software and electronic hardware. Whether these functions are performed by hardware or software depends on specific applications and design constraints of the technical solutions. A person skilled in the art may use different methods to implement the described functions for each particular application, but it should not be considered that, the implementation goes beyond the protection scope of this application.

In the several embodiments provided in this application, it should be understood that the disclosed apparatuses and methods may be implemented in other manners. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or a part of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. It may be clearly understood by a person skilled in the art that, for convenient and brief description, for a specific operating process of the foregoing system, apparatus, and unit, refer to a corresponding process in the foregoing method embodiments. Details are not described herein again.

## Claims

1. A parameter determining method, applied to a first transmission device, wherein the first transmission device is connected to a first client side device in a first data center DC, and the method comprises:
determining a transmission delay and/or a transmission distance of a first transmission channel between the first DC and a second DC; and
sending delay indication information to the first client side device, wherein the delay indication information indicates the transmission delay and/or the transmission distance, the transmission delay and/or the transmission distance are/is used to determine a sending parameter, and the sending parameter indicates at least one of the following:
a quantity of send queues, a depth of the send queue, or a block size of a message block of service data, wherein
the service data is data to be transmitted through the first transmission channel from the first client side device, and the send queue is a queue of the first client side device when the service data is sent through the first transmission channel.

2. The method according to claim 1, wherein the determining the transmission delay and/or the transmission distance of the first transmission channel between the first DC and the second DC comprises:
when a second transmission channel between the first DC and the second DC is faulty, and the second transmission channel is switched to the first transmission channel, determining the transmission delay and/or the transmission distance.

3. The method according to claim 2, wherein the method further comprises:
sending fault indication information to the first client side device, wherein the fault indication information indicates that the second transmission channel is faulty, and indicates the first client side device to transmit the service data through the first transmission channel.

4. The method according to any one of claims 1 to 3, wherein the method further comprises:
sending bit error information to the first client side device, wherein the bit error information indicates a bit error rate of a third transmission channel between the first DC and the second DC, and the bit error rate is used to control switching of the third transmission channel to the first transmission channel.

5. The method according to any one of claims 1 to 4, wherein the delay indication information further indicates bandwidth of the first transmission channel, and the bandwidth is used to determine the sending parameter.

6. The method according to any one of claims 1 to 5, wherein the delay indication information further indicates that a networking type between the first DC and the second DC is a hard channel or a soft channel.

7. The method according to any one of claims 1 to 6, wherein the first transmission channel comprises a plurality of sub transmission channels, and the transmission delay of the first transmission channel comprises a transmission delay of each of the plurality of sub transmission channels.

8. The method according to any one of claims 1 to 7, wherein transmission of the service data is performed between the first DC and the second DC based on a remote direct memory access RDMA protocol.

9. A parameter determining method, applied to a first client side device in a first data center DC, wherein the method comprises:
receiving delay indication information from a first transmission device, wherein the delay indication information indicates a transmission delay and/or a transmission distance of a first transmission channel between the first DC and a second DC; and
determining a sending parameter based on the transmission delay and/or the transmission distance, wherein the sending parameter indicates at least one of the following:
a quantity of send queues, a depth of the send queue, or a block size of a message block of service data, wherein
the service data is data to be transmitted through the first transmission channel from the first client side device, and the send queue is a queue of the first client side device when the service data is sent through the first transmission channel.

10. The method according to claim 9, wherein the method further comprises:
receiving bit error information from the first transmission device, wherein the bit error information indicates a bit error rate of a third transmission channel between the first DC and the second DC; and
when the bit error rate is greater than or equal to a bit error rate threshold, controlling to switch the third transmission channel to the first transmission channel.

11. The method according to claim 9 or 10, wherein the method further comprises:
receiving fault indication information from the first transmission device, wherein the fault indication information indicates that a second transmission channel between the first DC and the second DC is faulty; and
switching, based on the fault indication information, to the first transmission channel for transmission of the service data.

12. The method according to any one of claims 9 to 11, wherein the delay indication information further indicates bandwidth of the first transmission channel, and the bandwidth is used to determine the sending parameter.

13. The method according to any one of claims 9 to 12, wherein the delay indication information further indicates that a networking type between the first DC and the second DC is a hard channel or a soft channel.

14. The method according to any one of claims 9 to 13, wherein the first transmission channel comprises a plurality of sub transmission channels, and the transmission delay of the first transmission channel comprises a transmission delay of each of the plurality of sub transmission channels.

15. The method according to any one of claims 9 to 14, wherein transmission of the service data is performed between the first DC and the second DC based on a remote direct memory access RDMA protocol.

16. A communication apparatus, comprising a processing unit and a transceiver unit, wherein the processing unit and the transceiver unit are configured to perform the method according to any one of claims 1 to 8.

17. A communication apparatus, comprising a processing unit and a transceiver unit, wherein the processing unit and the transceiver unit are configured to perform the method according to any one of claims 9 to 15.

18. A communication apparatus, comprising at least one processor, wherein the at least one processor is coupled to at least one storage, and the at least one processor is configured to execute a computer program or instructions stored in the at least one storage, to cause the communication apparatus to perform the method according to any one of claims 1 to 8.

19. A communication apparatus, comprising at least one processor, wherein the at least one processor is coupled to at least one storage, and the at least one processor is configured to execute a computer program or instructions stored in the at least one storage, to cause the communication apparatus to perform the method according to any one of claims 9 to 15.

20. A communication system, comprising the communication apparatus according to claim 16 and the communication apparatus according to claim 17; or comprising the communication apparatus according to claim 18 and the communication apparatus according to claim 19.

21. A computer-readable storage medium, wherein the computer-readable storage medium stores instructions or program code, and when the instructions or the program code is executed by a processor, the processor is caused to implement the method according to any one of claims 1 to 8 or the method according to any one of claims 9 to 15.

22. A chip, wherein the chip comprises a processor and a communication interface, the communication interface is configured to: receive a data frame and transmit the data frame to the processor, or send a data frame to a communication apparatus other than a communication apparatus comprising the chip, and the processor is configured to perform the method according to any one of claims 1 to 8, or the method according to any one of claims 9 to 15.
